# FASCICULE DE BREVET EUROPEEN

(11) **EP 2 326 035 B1**
(45) Date de publication et mention de la délivrance du brevet: **27.05.2015**
(21) Numéro de dépôt: 10178300.9
(22) Date de dépôt: 22.09.2010
(51) Int. Cl.: H04H 60/14, H04N 21/418

(54) **Procédé de traitement par un module de sécurité de messages de contrôle d'accès à un contenu et module de sécurité associé**
Verarbeitungsverfahren durch ein Nachrichtensicherheitsmodul mit Zugriffskontrolle auf einen Inhalt, und damit verbundenes Sicherheitsmodul
Treatment method involving a message security module for controlling access to content and associated security module

(30) Priorité: 25.09.2009 FR 0956631
(43) Date de publication de la demande: 25.05.2011
(73) Titulaire: Orange, 75015 Paris (FR)
(72) Inventeur: Guionnet, Chantal, 35510 Cesson Sévigné (FR); Fevrier, Pierre, 35250 St Sulpice la Forêt (FR)
(74) Mandataire: Stephann, Valérie Annabelle

(56) Documents cités:
- EP-A1- 1 111 924
- WO-A1-2005/025220

## Description

L'invention se rapporte à la transmission de contenus multimédia dans un système de transmission à accès conditionnel, et plus particulièrement au contrôle d'accès à ces contenus.

Dans un système à accès conditionnel, l'accès à un contenu est subordonné à la vérification d'un ou plusieurs critères d'accès : ceux-ci doivent être satisfaits par des droits d'utilisateur pour autoriser l'accès au contenu. De nombreux systèmes de télévision numérique ou de radio sont des systèmes à "accès conditionnel".

D'emblée, on notera que par le terme "contenu", on entend désigner un ensemble de données pouvant correspondre à une partie ou à la totalité d'un programme TV, d'un film, d'une vidéo, d'une musique, etc.

Le DVB (Digital Video Broadcasting, soit "diffusion vidéo numérique") est un ensemble de normes de télévision numérique définissant notamment un système d'accès conditionnel. Le système à accès conditionnel défini dans le cadre de DVB s'appuie sur les principes suivants :
- le contenu est chiffré, avec une clé secrète de chiffrement-déchiffrement appelée "mot de contrôle" (*Control Word*);
- le "mot de contrôle", sous forme chiffrée, et le ou les critères d'accès au contenu sont transmis à un terminal utilisateur dans un message de contrôle d'accès appelé "ECM" (*Entitlement Control Message*) ;
- une clé d'exploitation K, apte à déchiffrer le mot de contrôle, ainsi que des informations nécessaires à la gestion des droits de l'utilisateur sont transmis au terminal d'utilisateur, le tout dans un message de gestion appelé "EMM." (*Entitlement Management Message*)*.*

A titre d'exemples illustratifs, le ou les critères d'accès à un contenu peuvent comprendre:
- un critère d'abonnement valide à la chaîne de télévision transmettant le contenu pour la période courante;
- un critère d'âge, par exemple avoir plus de 18 ans,
- un critère de coût, subordonnant l'accès au contenu à un débit de jetons pré-payés,
- etc.

Dans le terminal d'utilisateur, un module de sécurité, tel qu'une carte à puce, mémorise les droits de l'utilisateur fournis par le ou les message(s) EMM reçu(s).

Les messages de contrôle d'accès, ou ECM, sont transmis de façon synchrone avec le contenu auquel ils se rapportent. Durant la transmission d'un contenu, la valeur du mot de contrôle transporté par un ECM change généralement régulièrement, par exemple toutes les 10 secondes. Une succession de messages de contrôle ECM distincts, contenant différents mots de contrôle respectifs, sont donc transmis, de façon synchrone et concomitante à la transmission des contenus correspondants.

Chaque message ECM transmis en synchronisme et concomitamment à un contenu donné contient le ou les critères d'accès à ce contenu et le mot de contrôle apte à déchiffrer ce contenu synchronisée avec ce message ECM. Le message ECM une fois reçu par le terminal est transmis au module de sécurité. Celui-ci vérifie si le ou les critères d'accès qu'il contient sont satisfaits par les droits de l'utilisateur mémorisés dans le module de sécurité. Si la vérification est positive, le module de sécurité déchiffre le mot de contrôle puis transmet le mot de contrôle déchiffré au terminal qui peut alors déchiffrer le contenu en cours.

Un message de contrôle d'accès, ou ECM, transmis de façon synchrone avec un contenu donné, a pour rôle de protéger l'accès aux données de ce contenu particulier : il permet en effet d'obtenir le mot de contrôle apte à déchiffrer ces données de contenu, après vérification du ou des critères d'accès au contenu. Le rôle d'un ECM transmis de façon synchrone avec un contenu donné est donc limité à l'accès à ce contenu particulier.

La présente invention vise à améliorer la situation.

A cet effet, l'invention concerne un procédé de traitement par un module de sécurité de messages de contrôle d'accès, comprenant, suite à la réception d'un message de contrôle d'accès à un premier contenu, ledit message contenant au moins un critère d'accès au premier contenu, une première clé de déchiffrement du premier contenu, sous forme chiffrée, une deuxième clé de déchiffrement d'un deuxième contenu, sous forme chiffrée, le deuxième contenu étant distinct du premier contenu, les étapes suivantes :
- vérification que le critère d'accès présent dans le message de contrôle d'accès au premier contenu est satisfait par des droits d'utilisateur mémorisés dans le module de sécurité,
- la vérification étant positive, déchiffrement (E4) de la première (CW1ᵢ) et de la deuxième clé de déchiffrement (CW2ⱼ) puis
   - transmission (E7) de la première clé de déchiffrement (CW1ᵢ) vers un terminal externe (20A; 20C) pour déchiffrer le premier contenu et
   - mémorisation (E8) de la deuxième clé de déchiffrement (CW2ⱼ) dans le module de sécurité (30A, 30C) en vue de sa transmission ultérieure vers le terminal externe pour déchiffrer le deuxième contenu, l'accès au deuxième contenu étant conditionné par l'accès préalable au premier contenu.

L'invention permet ainsi, lors de la réception d'un premier contenu et d'un message de contrôle d'accès à ce premier contenu, de recevoir non seulement une clé pour déchiffrer les données de ce premier contenu, mais également une clé pour déchiffrer les données d'un deuxième contenu, distinct du premier. Ces clés sont présentes sous forme chiffrée dans le message de contrôle d'accès au premier contenu. Si le ou les critères d'accès au premier contenu sont satisfaits par les droits d'utilisateur mémorisés dans le module de sécurité, non seulement la clé relative au premier contenu est déchiffrée mais également la clé relative au deuxième contenu. La clé relative au premier contenu, une fois déchiffrée, est, de façon classique, transmise vers un terminal externe, tel qu'un décodeur, alors que la clé relative au deuxième contenu, une fois déchiffrée, est mémorisée localement dans le module de sécurité. Ainsi, le traitement d'un message de contrôle d'accès au premier contenu permet au module de sécurité d'obtenir et de mémoriser des clés de déchiffrement de contenus, une fois déchiffrées, autres que celui auquel se rapporte le message de contrôle d'accès considéré.

Dans une variante de réalisation particulière, la première et la deuxième clé de déchiffrement sont confondues en une même clé de déchiffrement et, après déchiffrement de ladite clé de déchiffrement, il est prévu une étape de mémorisation de la clé de déchiffrement déchiffrée dans le module de sécurité et une étape de transmission de la clé de déchiffrement déchiffrée vers le terminal externe.

Dans ce cas, la même clé de déchiffrement est prévue pour déchiffrer à la fois le premier contenu et le deuxième contenu.

Avantageusement, chaque clé de déchiffrement étant de l'un des types du groupe comprenant un type de clé à transmettre vers un terminal externe, un type de clé à mémoriser dans le module de sécurité et un type mixte de clé à transmettre vers un terminal externe et à mémoriser dans le module de sécurité, après déchiffrement de ladite clé de déchiffrement, il est prévu une étape de détermination du type de la clé.

La détermination du type de la clé de déchiffrement permet de façon simple de discriminer les clés déchiffrées à transmettre directement à un terminal externe, les clés déchiffrées à mémoriser localement dans le module de sécurité et les clés déchiffrées à transmettre directement au terminal externe et à mémoriser localement dans le module de sécurité.

Avantageusement encore, suite à la réception d'un message de contrôle d'accès au deuxième contenu, comprenant au moins un critère d'accès au deuxième contenu et une clé de déchiffrement du deuxième contenu, sous forme chiffrée, correspondant à ladite deuxième clé de déchiffrement de données mémorisée dans le module de sécurité, il est prévu :
- une étape préalable de vérification de la clé au cours de laquelle il est déterminé que la clé de déchiffrement présente dans le message de contrôle d'accès au deuxième contenu est déjà mémorisée dans le module de sécurité par comparaison d'un identifiant de clé présent dans le message (ECM2ⱼ) de contrôle d'accès au deuxième contenu (C2ⱼ) à au moins un identifiant de clé mémorisé dans le module de sécurité,
- puis une étape de transmission de la deuxième clé de déchiffrement déchiffrée mémorisée dans le module de sécurité vers un terminal externe, sans comparaison du critère d'accès relatif au deuxième contenu à des droits d'utilisateur mémorisés dans le module de sécurité.

Ainsi, lors de la réception ultérieure du deuxième contenu et d'un message de contrôle d'accès à ce deuxième contenu, le module de sécurité vérifie si la clé présente dans ce message de contrôle d'accès reçu est déjà mémorisée dans le module de sécurité. Si tel est le cas, la clé déchiffrée est récupérée dans la mémoire du module de sécurité puis transmise au terminal externe, sans que le ou les critères d'accès au deuxième contenu présents dans le message de contrôle d'accès au deuxième contenu ne soient vérifiés et sans que la clé présente dans ce message de contrôle ne soit déchiffrée. Grâce à cela, le terminal peut déchiffrer le deuxième contenu, même si le module de sécurité ne possède pas de droits suffisants pour satisfaire le(s) critère(s) d'accès au deuxième contenu. En outre, le déchiffrement de la clé n'étant pas nécessaire, la transmission de la clé déchiffrée, récupérée dans la mémoire du module de sécurité, vers le terminal externe est plus rapide.

L'invention concerne aussi un module de sécurité comprenant des moyens de traitement de messages de contrôle d'accès à des contenus, lesdits moyens de traitement comportant :
- des premiers moyens de vérification agencés, suite à la réception d'un message de contrôle d'accès à un premier contenu, ledit message comprenant au moins un critère d'accès au premier contenu, une première clé de déchiffrement du premier contenu, sous forme chiffrée, et une deuxième clé de déchiffrement d'un deuxième contenu distinct du premier, sous forme chiffrée, pour vérifier si le critère d'accès au premier contenu est satisfait par des droits d'utilisateur mémorisés dans le module de sécurité,
- des moyens de déchiffrement agencés pour déchiffrer la première et la deuxième clé de déchiffrement dans le cas où le critère d'accès au premier contenu est satisfait par les droits d'utilisateur,
- des moyens de transmission de la première clé de déchiffrement déchiffrée par les moyens de déchiffrement vers un terminal externe,
- des moyens de mémorisation de la deuxième clé de déchiffrement déchiffrée par les moyens de déchiffrement.

L'invention sera mieux comprise à l'aide de la description suivante d'un exemple de réalisation particulier du procédé de traitement de messages de contrôle d'accès et du module de sécurité associé selon l'invention, en référence aux dessins annexés sur lesquels:
- la figure 1 représente un système de transmission de contenus à travers un réseau vers des équipements d'utilisateur,
- les figures 2A et 2B représentent des organigrammes des étapes du procédé, selon l'exemple de réalisation décrit,
- la figure 3 représente un schéma bloc fonctionnel d'un module de sécurité pour la mise en oeuvre du procédé des figures 2A et 2B, selon l'exemple de réalisation décrit.

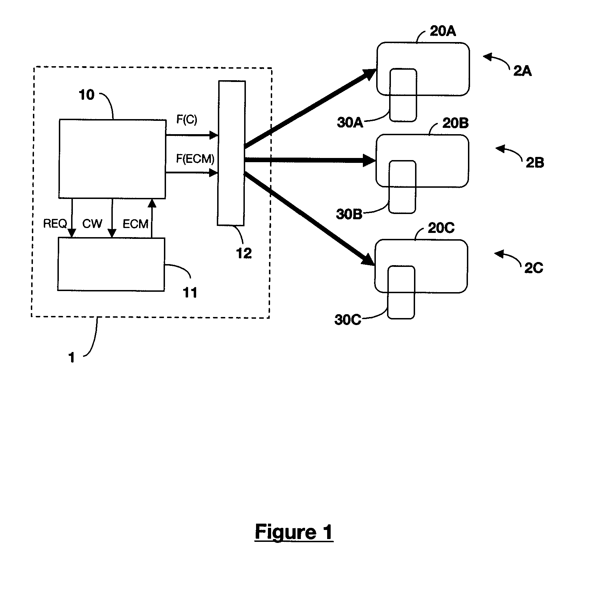

Sur la figure 1, on a représenté un système 1 de transmission de contenus à travers un réseau, en l'espèce l'Internet, vers des équipements d'utilisateur.

Le système de transmission 1 est destiné à transmettre un flux de données multimédia (ici audio, vidéo et éventuellement textuelles) relatives à en l'espèce à un programme de télévision, et un flux de messages de contrôle d'accès associés à ce programme, de façon synchrone, vers des équipements récepteurs 2A, 2B et 2C. Il comprend un codeur 10, un générateur 11 de messages de contrôle d'accès en l'espèce des ECMs (*Entitlement Control Messages*), et un multiplexeur 12.

En fonctionnement, pour un programme TV donné, le générateur d'ECMs 11 génère une succession de messages ECMs, sur requête du codeur 10. Chaque message ECM contient un ou plusieurs critère(s) d'accès au contenu, une clé de déchiffrement apte à déchiffrer une partie du programme, ladite clé étant chiffrée au moyen d'une clé d'exploitation K, ainsi qu'un identifiant de clé de déchiffrement. Cette clé de déchiffrement est généralement appelée "mot de contrôle" ou "Control Word" ou "CW". La succession d'ECMs générés par le générateur 11 pour le programme donné contient une succession de mots de contrôle respectifs, aptes à déchiffrer des parties successives du programme. On appelle "contenus" ces différentes parties successives du programme TV. L'identifiant de clé de déchiffrement, ou identifiant de mot de contrôle, noté "IdCW", présent dans chaque ECM permet de faire le lien entre le mot de contrôle contenu dans cet ECM et le contenu correspondant à déchiffrer (c'est-à-dire la partie correspondante à déchiffrer du programme), que ce mot de contrôle permet de déchiffrer. Le générateur 11 reçoit du codeur 10 les mots de contrôle CW en clair et fournit en retour les ECMs générés pour le contenu considéré, lesquels contiennent ces mots de contrôle CW sous forme chiffrée.

En fonctionnement, pour un programme TV donné, le codeur 10 adresse au générateur d'ECMs 11 une requête d'ECMs, notée REQ, contenant une succession de mots de contrôle en clair et les critères d'accès associés. En réponse, le codeur 10 reçoit une succession d'ECMs véhiculant ces mots de contrôle sous forme chiffrée. Le codeur 10 chiffre des parties successives du programme TV à l'aide des mots de contrôle en clair successifs générés. Il transmet ensuite au multiplexeur 12 un flux de données de programme, comportant des données multimédia (notamment audio, vidéo et texte) et chiffrées au moyen des mots de contrôle successifs, et un flux d'ECMs contenant les messages ECMs successifs associés aux parties successives du programme, autrement dit aux contenus successifs composant ce programme. Le multiplexeur 12 multiplexe le flux F(C) de données de contenus C et le flux d'ECMs correspondant F(ECM) et transmet le flux multiplexé vers des équipements récepteurs. Le flux de données de contenus F(C) et le flux d'ECMs F(ECM) sont transmis vers des équipements récepteurs de façon synchrone et concomitante. Cela signifie que, chaque ECM véhiculant un mot de contrôle CW apte à déchiffrer un contenu donné, cet ECM est transmis concomitamment à la transmission de ce contenu. Dans un mode de réalisation particulier, un même message ECM peut être transmis plusieurs fois, de façon répétée, durant la transmission du contenu avec lequel il est synchronisé.

En outre, selon l'exemple particulier de l'invention décrit ici, un ECM se rapportant à un contenu donné, appelé "premier contenu", et contenant par conséquent un mot de contrôle pour déchiffrer ce premier contenu, peut contenir au moins un autre mot de contrôle, sous forme chiffrée, se rapportant à un autre contenu, appelé "deuxième contenu", distinct du premier contenu, et apte à déchiffrer ce deuxième contenu. Le deuxième contenu peut correspondre à une autre partie du même programme TV que celui auquel appartient le premier contenu ou à une partie d'un autre programme TV. En toute hypothèse, le premier et le deuxième contenu sont distincts l'un de l'autre : les données du premier contenu ne sont pas les mêmes que les données du deuxième contenu.

Chaque équipement récepteur 2A (2B, 2C) comprend un terminal de décodage 20A (20B, 20C), ou décodeur, et un module de sécurité 30A (30B, 30C), en l'espèce une carte à puce. La carte à puce 30A (30B, 30C) mémorise des droits d'utilisateur ainsi qu'une clé d'exploitation K. Ces droits d'utilisateur et cette clé d'exploitation K ont été inscrits, mémorisés, dans la carte 30A (30B, 30C) suite à la réception par l'équipement 2A (2B, 2C) d'un ou de plusieurs messages de gestion, en l'espèce des EMMs (*Entitlement Management Message*), de façon connue. La clé d'exploitation K permet de déchiffrer des mots de contrôle présents dans des messages ECMs reçus.

Dans l'exemple particulier décrit ici, donné à titre illustratif uniquement, on considère la transmission de deux programmes TV, notés PG1 et PG2, par le système 1 vers les équipements récepteurs 2A, 2B et 2C. La carte à puce 30A de l'équipement 2A mémorise uniquement des droits suffisants pour accéder au premier programme PG1 mais pas pour accéder au deuxième programme PG2. La carte à puce 30B de l'équipement 2B mémorise des droits suffisants pour accéder au deuxième programme PG2 mais pas pour accéder au premier contenu programme PG1. La carte à puce 30C de l'équipement 2C mémorise des droits suffisants pour accéder à la fois au premier programme PG1 et au deuxième programme PG2.

Les deux programmes TV PG1 et PG2 peuvent être diffusés par une même chaîne de télévision ou par deux chaînes de télévision distinctes, successivement ou non successivement. Dans l'exemple illustratif particulier décrit ici, le premier programme PG1 correspond à une séquence de publicités et le deuxième programme PG2 correspond à un film. Le film PG2 est diffusé après la séquence de publicités PG1 par une même chaîne de télévision.

On va maintenant décrire la transmission du premier programme PG1 puis celle du deuxième programme PG2 vers chaque équipement récepteur 2A-2C. Chaque programme PG1 (respectivement PG2) est décomposé en une succession de contenus C1ᵢ (respectivement C2ⱼ) correspondant à des parties successives du programme PG1, par exemple d'une durée de 10s, avec 0 ≤ *i* (respectivement 0 ≤ *j*).

Pour la transmission du programme PG1, le système de transmission 1 transmet de façon synchrone un flux F(C1) de données de contenus C1ᵢ, comprenant les données multimédia (audio, vidéo et/ou texte) des contenus C1ᵢ successifs composant le programme PG1, et un flux F(ECM1) contenant une succession de messages de contrôle d'accès ECM1ᵢ se rapportant aux contenus C1ᵢ.

Les messages ECM1ᵢ successifs du flux F(ECM1), avec 0 ≤ *i* < *N,* contiennent chacun :
- un critère CA1 d'accès au contenu C1ᵢ auquel le message ECM1ᵢ se rapporte;
- un mot de contrôle CW1ᵢ, sous forme chiffrée à l'aide de la clé d'exploitation K, apte à déchiffrer le contenu C1ᵢ, transmis de façon synchrone et concomitante, avec le message ECM1ᵢ;
- un identifiant du mot de contrôle CW1ᵢ, noté IdCW1ᵢ permettant d'identifier le contenu C1ᵢ que le mot de contrôle CW1ᵢ permet de déchiffrer.

On notera que chaque message ECM1ᵢ a une durée de validité, par exemple de l'ordre de 10s, et qu'il est ici répété plusieurs fois dans le flux F(ECM1) pendant cette durée de validité.

Dans l'exemple décrit ici, les différents contenus C1ᵢ composant le programme PG1 ont tous le même critère d'accès CA1. En variante, ils pourraient avoir des critères d'accès respectifs distincts.

En outre, au moins une partie des messages ECM1ᵢ avec 0 ≤ *i* ≤ *N* contiennent chacun, en plus des éléments indiqués ci-dessus :
- un mot de contrôle CW2ⱼ se rapportant à un contenu C2ᵢ du programme PG2 et apte à déchiffrer ce contenu C2ⱼ, sous forme chiffrée à l'aide de la clé d'exploitation K;
- un identifiant du mot de contrôle CW2ⱼ, noté IdCW2ⱼ permettant d'identifier le contenu C2ⱼ que le mot de contrôle CW2ⱼ est apte à déchiffrer.

Dans l'exemple particulier décrit ici, chacun des messages ECM1ᵢ avec 0 ≤ *i* < *N* contient un mot de contrôle CW2ⱼ se rapportant au contenu C2, de sorte que les N messages ECM1ᵢ avec 0 ≤ *i* < *N* véhiculent N mots de contrôle CW2ⱼ avec 0 ≤ *j* < *N.* Ces N mots de contrôle CW2ⱼ avec 0 ≤ *j* < *N* permettent ici de déchiffrer les N premiers contenus C2ⱼ avec 0 ≤ *j* < *N* du programme PG2, ce qui correspond au début du programme PG2, par exemple les 10 premières minutes de ce programme. En variante, on pourrait envisager qu'une partie seulement des messages ECM1ᵢ avec 0 ≤ *i* < *N* contiennent des mots de contrôle CW2ⱼ se rapportant à des contenus C2ⱼ.

Le mot de contrôle CW1ᵢ et le mot de contrôle CW2ⱼ contenus dans le même message ECM1ᵢ sont des mots de contrôle de deux types distincts. Le mot de contrôle CW1ᵢ est de type "OUTSIDE" alors que le mot de contrôle CW2ⱼ est de type "INSIDE". Par définition :
- un mot de contrôle de type OUTSIDE est destiné à être transmis par le module de sécurité de l'équipement récepteur vers le terminal de décodage, soit après déchiffrement de ce mot de contrôle par le module de sécurité soit après récupération de ce mot de contrôle déchiffré dans une mémoire du module de sécurité, et
- un mot de contrôle de type INSIDE est destiné à être mémorisé dans le module de sécurité de l'équipement récepteur, après déchiffrement de ce mot de contrôle par le module de sécurité, comme cela sera explicité plus loin.

Le message ECM1ᵢ contient, pour chacun des deux mots de contrôle CW1ᵢ et CW2ⱼ, une indication sur le type du mot de contrôle.

En réception, chaque terminal de décodage 20A-20C reçoit le flux F(C1) de contenus C1ᵢ et le flux F(ECM1) de messages de contrôle d'accès ECM1ᵢ se rapportant aux contenus C1ᵢ, lors d'une étape E0. On considère qu'initialement, c'est-à-dire au début de la réception du contenu C1ᵢ, chaque carte 30A-30C ne contient aucun mot de contrôle déchiffré en mémoire.

Chaque nouveau message ECM1ᵢ reçu par le terminal 20A (20B, 20C) est directement retransmis à la carte 30A (30B, 30C), lors d'une étape E1. Lorsque ce message ECM1ᵢ, ici répété plusieurs fois dans le flux F(ECM1), est reçu une nouvelle fois par le terminal 20A (20B, 20C), il est filtré et non retransmis par le terminal 20A (20B, 20C) à la carte 30A (30B, 30C).

Dans une étape préalable de vérification E2, la carte 30A (30B, 30C) vérifie si les deux mots de contrôle CW1ᵢ et CW2ⱼ présents dans le message ECM1ᵢ en cours de traitement sont déjà en mémoire dans la carte 30A (30B, 30C).

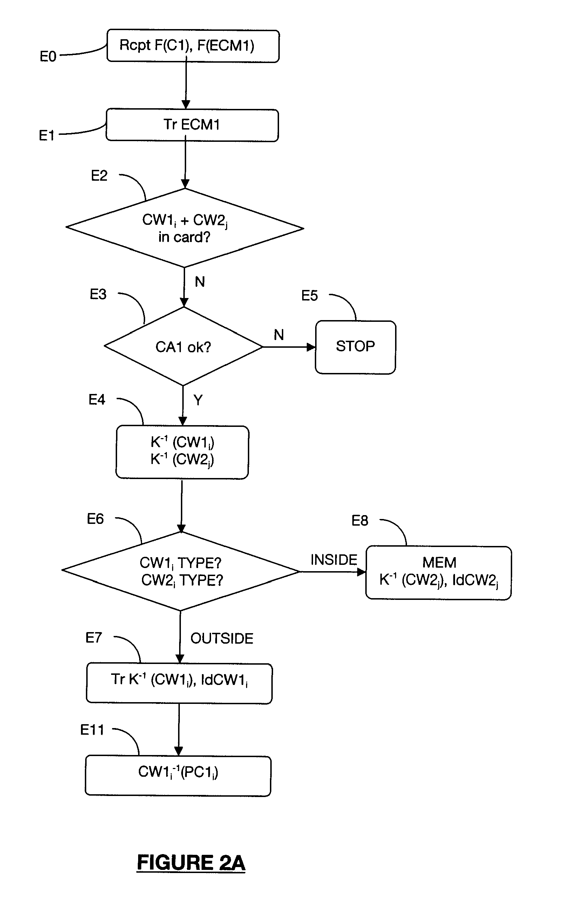

Dans le cas décrit ici, les mots de contrôle CW1ᵢ sont de type OUTSIDE et les mots de contrôle CW2ⱼ sont de type INSIDE et la mémoire de mots de contrôle de la carte 30A (30B, 30C) est initialement vide. Les mots de contrôle CW2ⱼ présents dans les différents messages ECM1ᵢ sont distincts les uns des autres. Lors du traitement de chaque nouveau message ECM1ᵢ, le mot de contrôle CW2ⱼ présent dans ce message ECM1ᵢ n'est donc pas déjà contenu en mémoire dans la carte 30A (30B, 30C). Pendant la réception de tous les contenus C1ᵢ (autrement dit pendant toute la réception du programme PG1), il est donc systématiquement déterminé à l'étape E2 que la carte 30A (30B, 30C) ne contient pas au moins l'un des deux mots de contrôle CW1ᵢ et CW2ⱼ en mémoire, ce qui correspond à la branche "N" suite à l'étape E2 sur la figure 2A, le message ECM1ᵢ est alors traité de façon classique lors d'étapes E3 et E4.

Lors de l'étape E3, le critère d'accès CA1 présent dans le message ECM1ᵢ est vérifié. Cette vérification consiste à déterminer si le critère CA1 est satisfait par les droits d'utilisateur mémorisés dans la carte 30A (30B, 30C).

Les cartes 30A et 30C ayant en mémoire des droits suffisants pour accéder au contenu C1ᵢ, il est déterminé par ces deux cartes que le critère d'accès CA1 est satisfait par les droits d'utilisateur mémorisés (branche "Y" suite à l'étape E3), le procédé passe à l'étape E4 de déchiffrement lors de laquelle chaque carte 30A, 30C déchiffre à la fois le mot de contrôle CW1ᵢ et le mot de contrôle CW2ⱼ présents dans le message ECM1ᵢ, à l'aide de la clé d'exploitation K mémorisée dans la carte 30A, 30C En variante, on pourrait envisager que la carte ne déchiffre que le(s) mot(s) de contrôle non déjà présent(s) en mémoire dans la carte.

La carte 30B n'ayant pas en mémoire de droits suffisants pour accéder au contenu C1ᵢ, il est déterminé par cette carte 30B que le critère CA1 n'est pas satisfait par les droits d'utilisateur mémorisés. Dans ce cas, l'étape E3 est suivie d'une étape E5 d'interruption du traitement de l'ECM1ᵢ (branche "N' suite à l'étape E3). Par conséquent, la carte 30B ne fournit pas le mot de contrôle CW1ᵢ déchiffré au terminal 20B pour déchiffrer le contenu C1 et ne mémorise pas le mot de contrôle CW2ⱼ déchiffré.

L'étape E4 de déchiffrement des mots de contrôle CW1ᵢ et CW2ⱼ par les cartes 30A et 30C est suivie d'une étape E6 de détermination du type de chacun des deux mots de contrôle. Lors de cette étape E6, chaque carte 30A, 30C détermine le type de chacun des deux mots de contrôle CW1ᵢ et CW2ⱼ. Ainsi, la carte 30A (et 30C) détermine que le mot de contrôle CW1ᵢ est de type OUTSIDE et que le mot de contrôle CW2ⱼ est de type INSIDE.

Le mot de contrôle CW1ᵢ étant de type OUTSIDE, il est transmis par la carte 30A (3C) vers le terminal de décodage externe 20A (20C), avec l'identifiant de mot de contrôle correspondant IdCW1ᵢ, lors d'une étape E7.

Le mot de contrôle CW2ⱼ étant de type INSIDE, il est mémorisé localement dans la carte 30A (30C), dans une mémoire 303, avec l'identifiant de mot de contrôle correspondant IdCW2ⱼ, lors d'une étape E8.

Après transmission du mot de contrôle CW1ᵢ par la carte 30A (30C) au terminal de décodage 20A (20C), à l'étape E7, il est prévu une étape E11 de déchiffrement des données du contenu C1ᵢ ayant été chiffrées avec ce mot de contrôle CW1ᵢ, par le terminal 20A(20C).

Les étapes précédemment décrites sont réitérées à la réception de chaque nouveau message ECM1ᵢ avec 0 ≤ *i* < *N* par la carte 30A (30C). Après avoir traité les N messages ECM1ᵢ avec 0 ≤ *i < N* , chacune des cartes 30A et 30C a en mémoire N mots de contrôle CW2ⱼ déchiffrés avec 0 ≤ *j < N.*

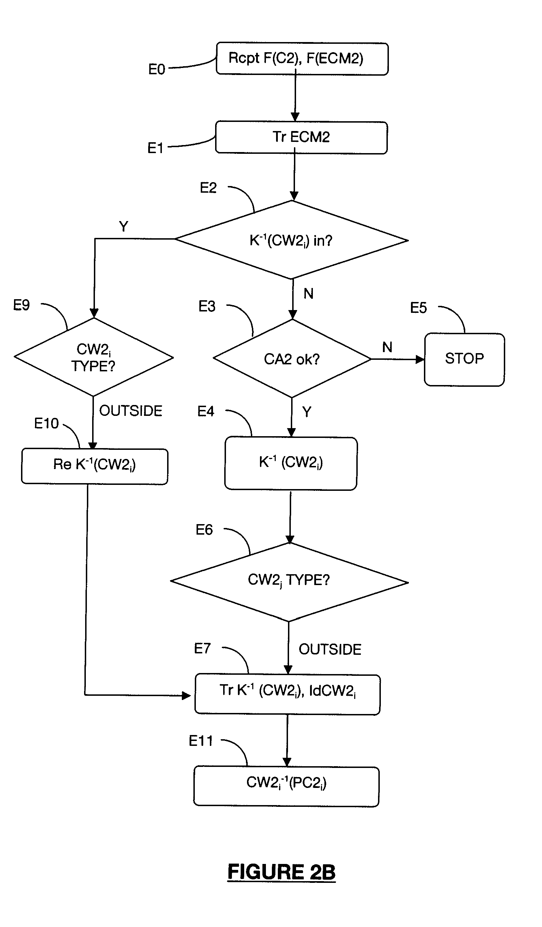

Dans l'exemple particulier de la description, la transmission des contenus C1ᵢ avec 0 ≤ *i* < *N* du programme PG1 est suivie de la transmission des contenus C2ⱼ du programme PG2. On va maintenant décrire la réception du flux F(C2) de contenus C2ⱼ et d'un flux F(ECM2) associé de messages ECM2ⱼ de contrôle d'accès aux contenus C2ⱼ par chaque équipement d'utilisateur 2A, 2B et 2C, en référence à la figure 2B. Les étapes de la figure 2B analogues aux étapes de la figure 2A, mais relatives au contenu C2 et aux messages ECM2, portent les mêmes références.

Le système de transmission 1 transmet à chaque équipement récepteur 2A, 2B et 2C un flux F(C2) de contenus C2ⱼ, comprenant des données multimédia (audio, vidéo et/ou texte), et un flux F(ECM2) de messages de contrôle d'accès ECM2ⱼ se rapportant à ces contenus C2ⱼ, de façon synchrone et concomitante.

Les messages ECM2ⱼ successifs du flux F(ECM2), avec 0 ≤ *j* < *M* et *M*>*N,* contiennent chacun :
- un critère CA2 d'accès au contenu C2ⱼ auquel se rapporte le message ECM2ⱼ considéré;
- un mot de contrôle CW2ⱼ, sous forme chiffrée à l'aide de la clé d'exploitation K, apte à déchiffrer le contenu C2ⱼ, transmis de façon synchrone et concomitante, avec le message ECM2ⱼ;
- un identifiant du mot de contrôle CW2ⱼ, noté IdCW2ⱼ permettant d'identifier le contenu C2ⱼ que le mot de contrôle CW2ⱼ permet de déchiffrer,
- une indication précisant le type du mot de contrôle CW2ⱼ, en l'espèce OUTSIDE.

On notera que chaque message ECM2ᵢ a une durée de validité, par exemple de l'ordre de 10s, et qu'il est ici répété plusieurs fois dans le flux F(ECM2) pendant cette durée de validité.

Dans l'exemple décrit ici, les différents contenus C2ⱼ composant le programme PG2 ont tous le même critère d'accès CA2. En variante, ils pourraient avoir des critères d'accès respectifs distincts.

En réception, chaque terminal de décodage 20A, 20B et 20C reçoit le flux F(C2) de contenus C2ⱼ et le flux F(ECM2) de messages de contrôle d'accès ECM2ⱼ se rapportant au contenu C2ⱼ, lors d'une étape E0.

Chaque nouveau message ECM2ⱼ reçu par le terminal 20A (20B, 20C) est directement retransmis à la carte associée 30A (30B, 30C), lors d'une étape E1. Lorsque ce même message ECM2ⱼ est reçu une nouvelle fois par le terminal, il est filtré et non retransmis par le terminal 20A (20B, 20C) à la carte associée 30A (30B, 30C).

Dans une étape préalable de vérification E2, la carte 30A (30B, 30C) vérifie si le mot de contrôle CW2ⱼ présent sous forme chiffrée dans le message ECM2ⱼ est déjà en mémoire dans la carte 30A (30B, 30C). Cette vérification est réalisée en comparant l'identifiant IdCW2ⱼ du mot de contrôle CW2ⱼ présent dans l'ECM2ⱼ reçu à l'identifiant de chacun des mots de contrôle mémorisé dans la carte 30A (30B, 30C) dans la mémoire 303.

Lors de cette étape E2, la carte 30B détermine qu'elle ne contient pas en mémoire le mot de contrôle CW2ⱼ. Dans ce cas (branche "N" suite à l'étape E2), l'étape E2 est suivie d'une étape E3 de vérification du critère d'accès CA2 vis-à-vis des droits d'utilisateur mémorisés dans la carte 30B. La carte 30B ayant en mémoire des droits suffisants pour accéder au contenu C2ⱼ, il est déterminé que le critère CA2 est satisfait (branche "Y" suite à l'étape E3) et l'étape E3 est suivie d'une étape E4 de déchiffrement du mot de contrôle CW2ⱼ par la carte 30B à l'aide de la clé d'exploitation K mémorisée.

Puis, la carte 30B détermine le type du mot de contrôle CW2ⱼ lors d'une étape E6. Le mot de contrôle CW2ⱼ étant de type OUTSIDE, le mot de contrôle CW2ⱼ déchiffré, c'est-à-dire en clair, est transmis par la carte 30B au terminal de décodage externe 20B, lors d'une étape E7. Le terminal de décodage 20B déchiffre ensuite le contenu correspondant C2ⱼ à l'aide de ce mot de contrôle CW2ⱼ en clair, lors d'une étape E11.

Lors de l'étape E2, chacune des cartes 30A et 30C détermine qu'elle contient déjà en mémoire le mot de contrôle CW2ⱼ, pour chaque indice j tel que 0 ≤ *j < N.* En effet, on rappelle que lors de la réception des contenus C1ᵢ et des messages de contrôle d'accès ECM1ᵢ avec 0 ≤ *i* < *N* , chacune de ces deux cartes 30A et 30C a mémorisé les N premiers mots de contrôle CW2ⱼ avec *0* ≤ *j* < *N* permettant de déchiffrer les N premières parties C2ⱼ avec 0 ≤ *j* < *N* du programme PG2.

Dans ce cas, l'étape E2 est suivie d'une étape E9 lors de laquelle la carte 30A (30C) détermine le type du mot de contrôle CW2ⱼ. Il est ainsi déterminé que le mot de contrôle CW2ⱼ est de type OUTSIDE (branche "OUTSIDE" suite à l'étape E9 sur la figure 2B).

L'étape E9 est alors suivie d'une étape E10 d'obtention du mot de contrôle CW2ⱼ sous forme déchiffrée, autrement dit en clair. Lors de cette étape E10, la carte 30A (30C) récupère dans la mémoire 303 de la carte 30A (30C) le mot de contrôle CW2ⱼ déchiffré, c'est-à-dire en clair, qui est associé à l'identifiant de mot de contrôle IdCW2ⱼ, présent dans le message ECM2ⱼ.

L'étape E10 est suivie de l'étape E7 lors de laquelle le mot de contrôle CW2ⱼ déchiffré extrait de la mémoire 303 et l'identifiant de mot de contrôle IdCW2ⱼ présent dans le message ECM2ⱼ sont transmis par la carte 30A (30C) au terminal de décodage externe 20A (20C).

Puis, lors de l'étape E11, le contenu C2ⱼ correspondant au message ECM2ⱼ est déchiffré par le terminal 20A (20C) à l'aide du mot de contrôle CW2ⱼ déchiffré fourni par la carte 30A (30C).

Le mot de contrôle CW2ⱼ déchiffré est ainsi récupéré dans la mémoire 303 de la carte 30A (30C) puis transmis au terminal externe 20A (20C), sans vérification du critère CA2 d'accès au contenu C2ⱼ, présent dans le message de contrôle ECM2ⱼ, vis-à-vis des droits d'utilisateur mémorisés dans la carte 30A (30C) et, par conséquent, sans déchiffrement du mot de contrôle CW2ⱼ contenu, sous forme chiffrée, dans le message ECM2ⱼ. On soulignera que la carte 30A n'a pas en mémoire de droits d'utilisateur suffisants pour accéder au contenu C2ⱼ. Néanmoins, cette carte 30A ayant récupéré et déchiffré les N premiers mots de contrôle CW2ⱼ d'accès aux contenus C2ⱼ avec 0 ≤ *j* < *N* lors de la réception du contenu C1, après vérification positive du critère CA1 d'accès au contenu C1, elle peut fournir au terminal 20A ces N premiers mots de contrôle CW2ⱼ déchiffrés de manière à ce que celui-ci déchiffre les N premiers contenus C2ⱼ avec *0* ≤ j < *N* du programme PG2, correspondant au début du programme PG2.

Lors de l'étape E2, pour chaque indice j supérieur ou égal à N (*N ≤ j*), chacune des deux cartes 30A et 30C détermine qu'elle ne contient pas en mémoire le mot de contrôle CW2ⱼ, lors de l'étape E2 (branche "N" suite à l'étape E2). Dans ce cas, l'étape E2 est suivie d'une étape E3 de vérification du critère CA2 d'accès au contenu C2ⱼ présent dans le message ECM2ⱼ, vis-à-vis des droits d'utilisateur mémorisés dans la carte 30A (30C).

La carte 30A n'ayant pas en mémoire de droits suffisants pour accéder au contenu C2ⱼ, elle détermine que le critère CA2 n'est pas satisfait par les droits d'utilisateur mémorisés dans la carte 30A (branche "N' suite à l'étape E3). L'étape E3 est donc suivie d'une étape E5 d'interruption du traitement.

La carte 30C ayant en mémoire des droits suffisants pour accéder au contenu C2ⱼ, elle détermine que le critère CA2 est satisfait par les droits d'utilisateur mémorisés par la carte 30C (branche "Y" suite à l'étape E3). L'étape E3 est donc suivie d'une étape de déchiffrement E4, lors de laquelle la carte 30C déchiffre le mot de contrôle CW2ⱼ contenu dans le message ECM2ⱼ à l'aide de la clé d'exploitation K. Puis la carte 30C vérifie le type du mot de contrôle le mot de contrôle CW2ⱼ. Ce mot de contrôle CW2ⱼ étant de type OUTSIDE, la carte 30C le transmet sous forme déchiffrée au terminal de décodage 20C lors d'une étape E6. Lors d'une étape E11, le terminal de décodage 20C déchiffre le contenu C2ⱼ correspondant.

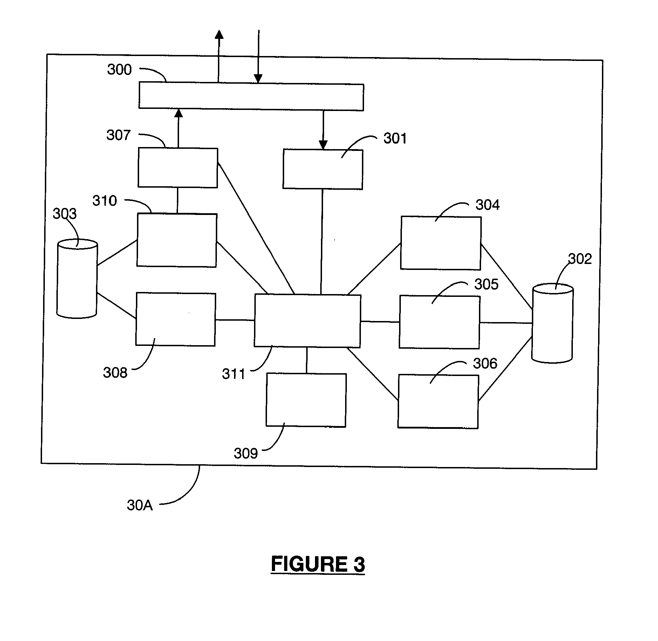

En référence à la figure 3, on va maintenant décrire un module de sécurité, en l'espèce une carte à puce, par exemple la carte 30A, selon un exemple de réalisation particulier de l'invention. Les cartes 30B et 30C sont similaires à la carte 30A.

D'emblée, on notera que seuls les éléments de la carte 30A nécessaires à la compréhension de l'invention sont décrits ici.

La carte à puce, ou module de sécurité, 30A comprend :
- une interface 300 de connexion avec un terminal de décodage externe;
- un module de réception 301;
- une première mémoire de stockage 302;
- un module 304 de traitement des messages de gestion EMM;
- un module 305 de vérification des critères d'accès présents dans les messages de contrôle d'accès ECM;
- un module 306 de déchiffrement des mots de contrôle présents dans les messages de contrôle d'accès ECM;
- un module 307 de transmission de mots de contrôle déchiffrés vers un terminal de décodage externe.

Le module de réception 301, relié à l'interface de connexion 300, est agencé pour recevoir des messages transmis par le terminal de décodage, ici le terminal 20A, auquel est connectée la carte 30A Ces messages comprennent des messages ECM de contrôle d'accès à un contenu ainsi que des messages de gestion EMM.

La mémoire de stockage 302 mémorise des droits d'utilisateur et une clé d'exploitation K permettant le déchiffrement de mots de contrôle CW, toutes ces données étant ici fournies à la carte dans des messages EMM.

Le module 304 de traitement de messages EMM est agencé pour traiter, de façon connue, les messages EMM reçus et retransmis à la carte 30A par le terminal de décodage 20A.

Le module 305 de vérification de critères d'accès est agencé pour vérifier si le ou les critères d'accès présents dans un message ECM sont satisfaits par les droits d'utilisateur mémorisés dans la mémoire 302. Le module 305 est ainsi adapté pour mettre en oeuvre l'étape E2 précédemment décrite.

Le module de déchiffrement 306 est agencé pour déchiffrer des mots de contrôle contenus dans des messages ECM, si le ou les critères d'accès présent(s) dans ces ECM sont satisfaits par les droits d'utilisateur mémorisés dans la mémoire 302. Ce module 306 est ainsi agencé pour mettre en oeuvre l'étape E4 précédemment décrite.

Le module de transmission 307, relié à l'interface de connexion 300, est agencé pour transmettre au terminal de décodage 20A auquel est connectée la carte 30A des mots de contrôle déchiffrés. Ce module 307 est ainsi adapté pour mettre en oeuvre l'étape E7 précédemment décrite.

Selon l'exemple particulier de réalisation de l'invention, la carte 30A comprend en outre :
- une deuxième mémoire 303,
- un module 308 de vérification d'un mot de contrôle présent dans un message de contrôle d'accès ECM reçu,
- un module 309 de détermination du type d'un mot de contrôle;
- un module 310 de récupération d'un mot de contrôle déchiffré dans la mémoire 303.

La deuxième mémoire 303 est agencée pour mémoriser des mots de contrôle CW de type INSIDE, en clair, déchiffrés par le module de déchiffrement 306, avec leurs identifiants respectifs IdCW.

Le module 308 de vérification de mot de contrôle est agencé pour vérifier, pour chaque message ECM de contrôle d'accès reçu, si le ou les mots de contrôle qu'il contient est ou sont déjà mémorisés dans la mémoire 303, par comparaison du ou des identifiants de mot de contrôle IdCW présent(s) dans le message ECM et le ou les identifiant(s) de mot de contrôle IdCW stocké(s) dans la mémoire 303. Ce module 308 est ainsi agencé pour mettre en oeuvre l'étape E2 du procédé précédemment décrit.

Le module 309 de détermination du type d'un mot de contrôle est agencé pour déterminer si un mot de contrôle est de type INSIDE ou de type OUTSIDE. Ce module 309 est ainsi adapté pour mettre en oeuvre les étapes E6 et E9 du procédé précédemment décrit.

Le module 310 est agencé pour récupérer dans la mémoire 303 un mot de contrôle déchiffré et ainsi mettre en oeuvre l'étape E10 du procédé précédemment décrit.

Les modules 305 à 310 appartiennent à un ensemble de moyens de traitement de messages ECM de la carte 30A.

En outre, la carte 30A comprend un module de commande 311, auquel tous les éléments de la carte 30A sont reliés et destiné à en contrôler le fonctionnement.

Les modules 305, 306, 308, 309 et 310 sont des modules logiciels comprenant des instructions de programme pour faire exécuter les étapes de procédé correspondantes par la carte 30A.

L'invention concerne donc aussi un programme d'ordinateur comportant des instructions pour la mise en oeuvre du procédé précédemment décrit par un module de sécurité, lorsque ce programme est exécuté par un processeur.

Les messages de contrôle d'accès à un contenu donné pourraient contenir plusieurs mots de contrôles relatifs à un ou plusieurs autre(s) contenus.

Dans l'exemple qui précède, tous les contenus C1ᵢ (respectivement C2ⱼ) composant le programme P1 (respectivement P2) ont le même critère d'accès noté CA1 (respectivement CA2). En variante, les critères d'accès associés à différents contenus C1ᵢ (respectivement C2ⱼ) du programme P1 (respectivement P2) pourraient être distincts les uns des autres.

Dans la description qui précède, les mots de contrôle sont soit de type OUTSIDE, autrement dit destinés à être transmis par le terminal à la carte directement, soit de type INSIDE, autrement dit destinés à être mémorisés par la carte avant d'être éventuellement transmis ultérieurement par la carte au terminal. Dans une variante de réalisation, on propose d'utiliser des mots de contrôle de type mixte, c'est-à-dire à la fois OUTSIDE et INSIDE. Dans ce cas, le premier et le deuxième mot de contrôle CW1ᵢ et CW2ⱼ présents dans le message ECM1ᵢ peuvent être confondus en un même mot de contrôle CW1ᵢ2ᵢ. Après déchiffrement du mot de contrôle CW1ᵢ2ⱼ à l'étape E4, il est alors prévu une étape de détermination du type du mot de contrôle CW1ᵢ2ⱼ (étape E6). Il est ainsi déterminé lors de cette étape E6 que le mot de contrôle CW1ᵢ2ⱼ est de type mixte OUTSIDE-INSIDE. L'étape E6 est alors suivie d'une étape E8 de mémorisation du mot de contrôle déchiffré CW1ᵢ2ⱼ dans la mémoire 303 de la carte, avec son identifiant de mot de contrôle IdCW1ᵢ2ⱼ, et d'une étape E7 de transmission du mot de contrôle CW1ᵢ2ⱼ déchiffré vers le terminal externe 20. Ainsi, le même mot de contrôle CW1ᵢ2ⱼ peut être utilisé pour déchiffrer le contenu C1ᵢ et le contenu C2ⱼ.

## Revendications

1. Procédé de traitement par un module de sécurité (30A; 30B; 30C) de messages de contrôle d'accès à un contenu, comprenant, suite à la réception d'un message de contrôle d'accès à un premier contenu, ledit message contenant au moins un critère (CA1) d'accès au premier contenu, une première clé (CW1ᵢ) de déchiffrement du premier contenu, sous forme chiffrée, une deuxième clé (CW2ⱼ) de déchiffrement d'un deuxième contenu, sous forme chiffrée, le deuxième contenu étant distinct du premier contenu, les étapes suivantes :
- vérification (E3) que le critère d'accès (CA1) présent dans le message de contrôle d'accès au premier contenu est satisfait par des droits d'utilisateur mémorisés dans le module de sécurité (30A, 30C);
- la vérification étant positive, déchiffrement (E4) de la première (CW1ᵢ) et de la deuxième clé de déchiffrement (CW2ⱼ) puis
- transmission (E7) de la première clé de déchiffrement (CW1ᵢ) déchiffrée vers un terminal externe (20A, 20C) pour déchiffrer le premier contenu et
- mémorisation (E8) de la deuxième clé de déchiffrement (CW2ⱼ) déchiffrée dans le module de sécurité (30A; 30C) en vue de sa transmission ultérieure vers le terminal externe pour déchiffrer le deuxième contenu, l'accès au deuxième contenu étant conditionné par l'accès préalable au premier contenu.

2. Procédé selon la revendication 1, dans lequel, la première et la deuxième clé de déchiffrement sont confondues en une même clé de déchiffrement et, après déchiffrement de ladite clé de déchiffrement, il est prévu une étape de mémorisation de la clé de déchiffrement déchiffrée dans le module de sécurité et une étape de transmission de la clé de déchiffrement déchiffrée vers le terminal externe.

3. Procédé selon la revendication 1, dans lequel, chaque clé de déchiffrement (CW1ᵢ, CW2ⱼ) étant de l'un des types du groupe comprenant un type de clé à transmettre vers un terminal externe, un type de clé à mémoriser dans le module de sécurité et un type mixte de clé à transmettre vers un terminal externe et à mémoriser dans le module de sécurité, après déchiffrement de ladite clé de déchiffrement, il est prévu une étape (E6) de détermination du type de la clé.

4. Procédé selon la revendication 1, dans lequel, suite à la réception d'un message de contrôle d'accès au deuxième contenu, comprenant au moins un critère (CA2) d'accès au deuxième contenu et une clé (CW2ⱼ) de déchiffrement du deuxième contenu, sous forme chiffrée, correspondant à ladite deuxième clé de déchiffrement de données mémorisée dans le module de sécurité (30A; 30C), il est prévu :
- une étape préalable (E2) de vérification de la clé au cours de laquelle il est déterminé que la clé de déchiffrement (CW2ⱼ) présente dans le message de contrôle d'accès au deuxième contenu est déjà mémorisée dans le module de sécurité (30A; 30C) par comparaison d'un identifiant de clé présent dans le message de contrôle d'accès au deuxième contenu à au moins un identifiant de clé mémorisé dans le module de sécurité;
- puis une étape de transmission de la deuxième clé de déchiffrement déchiffrée (CW2ⱼ) mémorisée dans le module de sécurité (30A; 30C) vers un terminal externe (20A; 20C), sans comparaison du critère d'accès (CA2) relatif au deuxième contenu à des droits d'utilisateur mémorisés dans le module de sécurité (30A; 30C).

5. Module de sécurité comprenant des moyens de traitement de messages de contrôle d'accès à des contenus, lesdits moyens de traitement comportant :
- des premiers moyens de vérification (305) agencés, suite à la réception d'un message de contrôle d'accès à un premier contenu, ledit message comprenant au moins un critère (CA1) d'accès au premier contenu, une première clé (CW1ᵢ) de déchiffrement du premier contenu, sous forme chiffrée, et une deuxième clé (CW2ⱼ) de déchiffrement d'un deuxième contenu distinct du premier contenu, sous forme chiffrée, pour vérifier si le critère (CA1) d'accès au premier contenu est satisfait par des droits d'utilisateur mémorisés dans le module de sécurité,
- des moyens de déchiffrement (306) agencés pour déchiffrer la première et la deuxième clé de déchiffrement (CW1ᵢ, CW2ᵢ) dans le cas où le critère (CA1) d'accès au premier contenu est satisfait par les droits d'utilisateur,
- des moyens de transmission(307) agencés pour transmettre la première clé de déchiffrement (CW1ᵢ) déchiffrée par lesdits moyens de déchiffrement vers un terminal externe pour déchiffrer le premier contenu, ,
- des moyens (303) de mémorisation de la deuxième clé de déchiffrement (CW2ⱼ) déchiffrée par lesdits moyens de déchiffrement, agencés pour mémoriser la deuxième clé de déchiffrement en vue de sa transmission ultérieure vers le terminal externe, par lesdits moyens de transmission, pour déchiffrer le deuxième contenu.

6. Module de sécurité selon la revendication 5, dans lequel les moyens de traitement comprennent des deuxièmes moyens de vérification (308) agencés, suite à la réception d'un message de contrôle d'accès à un deuxième contenu, ledit message comprenant au moins un critère (CA2) d'accès au deuxième contenu et une clé (CW2ⱼ) de déchiffrement du deuxième contenu, sous forme chiffrée, pour déterminer si la clé de déchiffrement (CW2ⱼ) présente dans le message de contrôle d'accès au deuxième contenu est déjà mémorisée dans le module de sécurité, par comparaison d'un identifiant de clé présent dans le message de contrôle d'accès au deuxième contenu à au moins un identifiant de clé mémorisé dans le module de sécurité, et dans lequel les moyens de transmission (307) sont agencés, si la clé (CW2ⱼ) présente dans le message de contrôle d'accès au deuxième contenu est déjà mémorisée dans le module de sécurité, pour transmettre ladite clé mémorisée (CW2ⱼ) vers un terminal externe, sans comparaison du critère (CA2) d'accès au deuxième contenu à des droits d'utilisateur mémorisés dans le module de sécurité.

7. Programme d'ordinateur comportant des instructions pour la mise en oeuvre du procédé selon la revendication 1 par un module de sécurité, lorsque ce programme est exécuté par un processeur.

## Patentansprüche

1. Verfahren zum Verarbeiten durch ein Sicherheitsmodul (30A; 30B; 30C) von Nachrichten für die Steuerung des Zugriffs auf einen Inhalt, das nach dem Empfang einer Nachricht für die Steuerung des Zugriffs auf einen ersten Inhalt, wobei die Nachricht wenigstens ein Kriterium (CA1) für den Zugriff auf den ersten Inhalt, einen ersten Schlüssel (CW1ᵢ) zum Entschlüsseln des ersten Inhalts in verschlüsselter Form und einen zweiten Schlüssel (CW2ⱼ) zum Entschlüsseln eines zweiten Inhalts in verschlüsselter Form, wobei der zweite Inhalt von dem ersten Inhalt verschieden ist, enthält, die folgenden Schritte umfasst:
- Verifizieren (E3), dass das Zugriffskriterium (CA1), das in der Nachricht für die Steuerung des Zugriffs auf den ersten Inhalt vorhanden ist, durch Anwenderrechte, die in dem Sicherheitsmodul (30A; 30C) gespeichert sind, erfüllt ist;
- bei positiver Verifikation Entschlüsseln (E4) des ersten (CW1ᵢ) und des zweiten (CW2ⱼ) Entschlüsselungsschlüssels, dann
- Senden (E7) des ersten entschlüsselten Entschlüsselungsschlüssels (CW1ᵢ) zu einem externen Endgerät (20A; 20C), um den ersten Inhalt zu entschlüsseln, und
- Speichern (E8) des zweiten entschlüsselten Entschlüsselungsschlüssels (CW2ⱼ) in dem Sicherheitsmodul (30A; 30C), um ihn später zu dem externen Endgerät zu senden, um den zweiten Inhalt zu entschlüsseln, wobei der Zugriff auf den zweiten Inhalt durch den vorherigen Zugriff auf den ersten Inhalt bedingt ist.

2. Verfahren nach Anspruch 1, wobei der erste und der zweite Entschlüsselungsschlüssel derselbe Entschlüsselungsschlüssel sind und nach der Entschlüsselung des Entschlüsselungsschlüssels ein Schritt des Speicherns des entschlüsselten Entschlüsselungsschlüssels in dem Sicherheitsmodul und ein Schritt des Sendens des entschlüsselten Entschlüsselungsschlüssels zu dem externen Endgerät vorgesehen sind.

3. Verfahren nach Anspruch 1, wobei dann, wenn jeder Entschlüsselungsschlüssel (CW1ᵢ, CW2ⱼ) gleich einem der Typen der Gruppe ist, die einen zu einem externen Endgerät zu sendenden Schlüsseltyp, einen in dem Sicherheitsmodul zu speichernden Schlüsseltyp und einen zu einem externen Endgerät zu sendenden und in dem Sicherheitsmodul zu speichernden Schlüsselmischtyp umfasst, nach dem Entschlüsseln des Entschlüsselungsschlüssels ein Schritt (E6) des Bestimmens des Schlüsseltyps vorgesehen ist.

4. Verfahren nach Anspruch 1, wobei nach dem Empfang einer Nachricht für die Steuerung des Zugriffs auf den zweiten Inhalt, die wenigstens ein Kriterium (CA2) für den Zugriff auf den zweiten Inhalt und einen Schlüssel (CW2ⱼ) zum Entschlüsseln des zweiten Inhalts in verschlüsselter Form, der dem zweiten Schlüssel zum Entschlüsseln von Daten, die in dem Sicherheitsmodul (30A; 30C) gespeichert sind, entspricht, enthält, Folgendes vorgesehen ist:
- einen vorhergehenden Schritt (E2) des Verifizierens des Schlüssels, in dessen Verlauf bestimmt wird, dass der Entschlüsselungsschlüssel (CW2ⱼ), der in der Nachricht für die Steuerung des Zugriffs auf den zweiten Inhalt vorhanden ist, bereits in dem Sicherheitsmodul (30A; 30C) gespeichert ist, indem eine Schlüsselkennung, die in der Nachricht für die Steuerung des Zugriffs auf den zweiten Inhalt vorhanden ist, mit wenigstens einer in dem Sicherheitsmodul gespeicherten Schlüsselkennung verglichen wird;
- dann einen Schritt des Sendens des entschlüsselten zweiten Entschlüsselungsschlüssels (CW2ⱼ), der in dem Sicherheitsmodul (30A; 30C) gespeichert ist, zu einem externen Endgerät (20A; 20C), ohne dass das Zugriffskriterium (CA2) in Bezug auf den zweiten Inhalt mit Anwenderrechten, die in dem Sicherheitsmodul (30A; 30C) gespeichert sind, verglichen wird.

5. Sicherheitsmodul, das Mittel zum Verarbeiten von Nachrichten für die Steuerung des Zugriffs auf Inhalte umfasst, wobei die Verarbeitungsmittel Folgendes umfassen:
- erste Verifikationsmittel (305), die dafür ausgelegt sind, nach dem Empfang einer Nachricht für die Steuerung des Zugriffs auf einen ersten Inhalt, wobei die Nachricht wenigstens ein Kriterium (CA1) für den Zugriff auf den ersten Inhalt, einen ersten Schlüssel (CW1ᵢ) zum Entschlüsseln des ersten Inhalts in verschlüsselter Form und einen zweiten Schlüssel (CW2ⱼ) zum Entschlüsseln des zweiten Inhalts in verschlüsselter Form, der von dem ersten Inhalt verschieden ist, enthält, zu verifizieren, ob das Kriterium (CA1) für den Zugriff auf den ersten Inhalt durch Anwenderrechte, die in dem Sicherheitsmodul gespeichert sind, erfüllt ist,
- Entschlüsselungsmittel (306), die dafür ausgelegt sind, den ersten und den zweiten Entschlüsselungsschlüssel (CW1ᵢ, CW2ⱼ) in dem Fall zu entschlüsseln, in dem das Kriterium (CA1) für den Zugriff auf den ersten Inhalt durch die Anwenderrechte erfüllt ist,
- Sendemittel (307), die dafür ausgelegt sind, den ersten Entschlüsselungsschlüssel (CW1ᵢ), der durch die Entschlüsselungsschlüssel entschlüsselt worden ist, zu einem externen Endgerät zu senden, um den ersten Inhalt zu entschlüsseln,
- Mittel (303) zum Speichern des zweiten Entschlüsselungsschlüssels (CW2ⱼ), der durch die Entschlüsselungsmittel entschlüsselt worden ist, die dafür ausgelegt sind, den zweiten Entschlüsselungsschlüssel zu speichern, um ihn später durch die Sendemittel zu dem externen Endgerät zu senden, um den zweiten Inhalt zu entschlüsseln.

6. Sicherheitsmodul nach Anspruch 5, wobei die Verarbeitungsmittel zweite Verifikationsmittel (308) umfassen, die dafür ausgelegt sind, nach dem Empfang einer Nachricht für die Steuerung des Zugriffs auf einen zweiten Inhalt, wobei die Nachricht wenigstens ein Kriterium (CA2) für den Zugriff auf den zweiten Inhalt und einen Schlüssel (CW2ⱼ) zum Entschlüsseln des zweiten Inhalts in verschlüsselter Form enthält, zu bestimmen, ob der Entschlüsselungsschlüssel (CW2ⱼ), der in der Nachricht für die Steuerung des Zugriffs auf den zweiten Inhalt vorhanden ist, bereits in dem Sicherheitsmodul gespeichert worden ist, indem eine Schlüsselkennung, die in der Nachricht für die Steuerung des Zugriffs auf den zweiten Inhalt vorhanden ist, mit wenigstens einer in dem Sicherheitsmodul gespeicherten Schlüsselkennung verglichen wird, und wobei die Sendemittel (307) dafür ausgelegt sind, dann, wenn der Schlüssel (CW2ⱼ), der in der Nachricht für die Steuerung des Zugriffs auf den zweiten Inhalt vorhanden ist, bereits in dem Sicherheitsmodul gespeichert ist, den gespeicherten Schlüssel (CW2ⱼ) zu einem externen Endgerät zu senden, ohne das Kriterium (CA2) für den Zugriff auf den zweiten Inhalt mit Anwenderrechten, die in dem Sicherheitsmodul gespeichert sind, zu vergleichen.

7. Computerprogramm, das Befehle enthält, um das Verfahren nach Anspruch 1 durch ein Sicherheitsmodul auszuführen, wenn dieses Programm von einem Prozessor ausgeführt wird.

## Claims

1. Processing method involving a security module (30A;30B;30C) for messages controlling access to a content, comprising, following the receipt of a message controlling access to a first content, said message containing at least one criterion (CA1) for accessing the first content, a first key (CW1ᵢ) for deciphering the first content, in enciphered form, and a second key (CW2ⱼ) for deciphering a second content, in enciphered form, the second content being separate from the first content, the following steps:
- checking (E3) that the access criterion (CA1) present in the message controlling access to the first content is met by user rights stored in memory in the security module (30A;30C);
- the check being positive, deciphering (E4) the first (CW1ᵢ) and the second (CW2j) deciphering keys then
- transmitting (E7) the first deciphered deciphering key (CW1ᵢ) to an external terminal (20A;20C) to decipher the first content and
- storing (E8) the second deciphered deciphering key (CW2ⱼ) in memory in the security module (30A;30C) with a view to its subsequent transmission to the external terminal to decipher the second content, access to the second content being conditional upon prior access to the first content.

2. Method according to Claim 1, in which the first and the second deciphering keys are merged into one and the same deciphering key and, after deciphering of said deciphering key, a step of storing the deciphered deciphering key in memory in the security module and a step of transmitting the deciphered deciphering key to the external terminal are provided.

3. Method according to Claim 1, in which, each deciphering key (CW1ᵢ,CW2ⱼ) being from one of the types of the group comprising a type of key to be transmitted to an external terminal, a type of key to be stored in memory in the security module and a mixed type of key to be transmitted to an external terminal and to be stored in memory in the security module, after deciphering of said deciphering key, a step (E6) of determining the type of the key is provided.

4. Method according to Claim 1, in which, following the receipt of a message controlling access to the second content, comprising at least one criterion (CA2) for accessing the second content and a key (CW2ⱼ) for deciphering the second content, in enciphered form, corresponding to said second data deciphering key stored in memory in the security module (30A;30C), there are provided:
- a prior step (E2) of checking the key during which it is determined that the deciphering key (CW2ⱼ) present in the message controlling access to the second content is already stored in memory in the security module (30A;30C) by comparing a key identifier present in the message controlling access to the second content to at least one key identifier stored in memory in the security module;
- then a step of transmitting the second deciphered deciphering key (CW2ⱼ) stored in memory in the security module (30A;30C) to an external terminal (20A;20C), without comparing the access criterion (CA2) relating to the second content to user rights stored in memory in the security module (30A;30C).

5. Security module comprising means for processing messages controlling access to contents, said processing means including:
- first checking means (305) arranged, following the receipt of a message controlling access to a first content, said message comprising at least one criterion (CA1) for accessing the first content, a first key (CW1ᵢ) for deciphering the first content, in enciphered form, and a second key (CW2ⱼ) for deciphering a second content separate from the first content, in enciphered form, to verify whether the criterion (CA1) for accessing the first content is met by user rights stored in memory in the security module,
- deciphering means (306) arranged to decipher the first and the second deciphering keys (CW1ᵢ, CW2ⱼ), in the case where the criterion (CA1) for accessing the first content is met by the user rights,
- transmitting means (307) arranged to transmit the first deciphering key (CW1ᵢ) deciphered by said deciphering means to an external terminal to decipher the first content,
- means (303) for storing in memory the second deciphering key (CW2ⱼ) deciphered by said deciphering means, arranged to store the second deciphering key in memory with a view to its subsequent transmission to the external terminal, by way of said transmitting means, to decipher the second content.

6. Security module according to Claim 5, in which the processing means comprise second checking means (308) arranged, following the receipt of a message controlling access to a second content, said message comprising at least one criterion (CA2) for accessing the second content and a key (CW2ⱼ) for deciphering the second content, in enciphered form, to determine whether the deciphering key (CW2ⱼ) present in the message controlling access to the second content is already stored in memory in the security module, by comparing a key identifier present in the message controlling access to the second content to at least one key identifier stored in memory in the security module, and in which the transmitting means (307) are arranged, if the key (CW2ⱼ) present in the message controlling access to the second content is already stored in memory in the security module, to transmit said key stored in memory (CW2ⱼ) to an external terminal, without comparing the criterion (CA2) for accessing the second content to user rights stored in memory in the security module.

7. Computer program including instructions for implementing the method according to Claim 1 involving a security module, when this program is executed by a processor.
